# EUROPÄISCHE PATENTSCHRIFT

(11) **EP 1 221 288 B1**
(45) Veröffentlichungstag und Bekanntmachung des Hinweises auf die Patenterteilung: **19.11.2008**
(21) Anmeldenummer: 01129507.8
(22) Anmeldetag: 11.12.2001
(51) Int. Cl.: A24C 5/28, B23D 35/00

(54) **Verfahren und Vorrichtung zum Ersetzen eines Messers in einem Schneidapparat**
Method and device for replacing a knife in a cutting apparatus
Procédé et dispositif pour le remplacement d'un couteau dans un appareil de coupe

(30) Priorität: 08.01.2001 DE 10100464
(43) Veröffentlichungstag der Anmeldung: 10.07.2002
(73) Patentinhaber: Hauni Maschinenbau AG, 21033 Hamburg (DE)
(72) Erfinder: Schicke, Joachim, 21465 Wentorf (DE)
(74) Vertreter: Eisenführ, Speiser & Partner

(56) Entgegenhaltungen:
- DE-A- 2 656 003
- US-A- 5 217 424
- US-A- 5 417 637
- US-A- 5 444 904

## Beschreibung

Die Erfindung betrifft ein Verfahren und eine Vorrichtung zum Ersetzen eines in einer Messeraufnahme eines Schneidapparates zum Schneiden von Zwischenprodukten der tabakverarbeitenden Industrie gehaltenen Messers mit einem neuen Messer.

In der tabakverarbeitenden Industrie werden zumeist stabförmige Artikel, wie etwa Zigaretten, Zigarren, Zigarillos, Filterstäbe oder Hülsen, hergestellt. Bei der Herstellung dieser stabförmigen Artikel wird zunächst auf einer Strangmaschine als Zwischenprodukt ein endloser Strang gebildet. Um aus diesem endlosen Strang schließlich die gewünschten Einzelartikel zu erhalten, wird der Strang mit einem Messer in die Einzelartikel zerschnitten. Das Messer befindet sich dabei in einer Messeraufnahme eines entsprechenden Schneidapparates in der Strangmaschine.

Da insbesondere bei dem Schneiden eines Zigarettenstranges hohe Anforderungen an die Qualität des Schnittes gestellt werden, da dieser später bei der fertigen Zigarette sichtbar ist, ist ein ständiges Nachschleifen des Messers zur Erhaltung der Schärfe des Schnittes notwendig. Denn das Messer stumpft schnell ab, da bei modernen Zigarettenstrangmaschinen mehrere tausend Schnitte pro Minute zur Vereinzelung des Stranges notwendig sind. Somit ist bei einer derartigen Zigarettenstrangmaschine etwa alle acht Stunden ein Entfernen des verbrauchten Messers aus dem Schneidapparat und das Ersetzen des alten Messers durch Bestücken des Schneidapparates mit einem neuen Messer erforderlich. Dieser Messerwechsel wird im Stand der Technik durch das Bedienpersonal von Hand vorgenommen.

Aufgabe der vorliegenden Erfindung ist es daher, die Notwendigkeit des Einsatzes von Bedienpersonal beim Entfernen und Zuführen von Messern zu reduzieren.

Diese Aufgabe wird erfindungsgemäß durch ein Verfahren gemäß Anspruch 1 und eine Vorrichtung gemäß Anspruch 17 gelöst.

Die Erfindung schließt die Erkenntnis ein, daß aufgrund des Einsatzes von zumindest teilweise automatisch ablaufenden Verfahren und entsprechender Vorrichtungen die Notwendigkeit des Einsatzes von Bedienpersonal beim Messerwechsel reduziert oder ganz vermieden werden kann. Es läßt sich somit dank des Einsatzes der erfindungsgemäßen Verfahren bzw. Vorrichtungen eine sehr viel größer Anzahl von Zigarettenstrangmaschinen von beispielsweise nur einer Person gleichzeitig bedienen. Denn der Einsatz dieser Person ist an den einzelnen Strangmaschinen nur noch im Ausnahmefall, beispielsweise bei Störungen, erforderlich.

Die Vorteile der Erfindung liegen insbesondere in dem automatischen Lösen der Halterung des Messers in der Messeraufnahme vor dem Entfernen des alten Messers bzw, in dem automatischen Halten des neuen Messers in der Messeraufnahme nach dem Einführen des neuen Messers. Denn durch die Automatisierung der Deaktivierung bzw. Aktivierung der Halterung des Messers in der Messeraufnahme wird die Basis für die Automatisierung des gesamten Messerwechsels geschaffen.

Bei einer vorteilhaften Ausführungsform des erfindungsgemäßen Verfahrens zum Ersetzen des Messers wird das Messer vor dem Entfernen, bevorzugt nach dem Lösen der Halterung des Messers, ergriffen, das ergriffene Messer aus der Messeraufnahme im wesentlichen linear herausgezogen, und das herausgezogene Messer einer Entsorgungsposition zugeführt und freigegeben. Dabei wird bei einem weiteren Ausführungsbeispiel das Messer zum Ergreifen an seiner Schneide eingeklemmt. Auf diese Weise läßt sich das Messer einfach entfernen, da die Schneide des Messers immer von außen zugänglich ist.

Bei einem weiteren Ausführungsbeispiel des Verfahrens zum Ersetzen des Messers wird das Messer vor dem Entfernen in eine vorbestimmte Entfernposition gebracht, wobei die Schneidearbeit des Messers vor dem Entfernen zumindest für die Dauer des Entfernens unterbrochen wird. Dabei wird der Zeitpunkt der Unterbrechung vorteilhaft derart gewählt, daß das Messer sich in dem Moment der Unterbrechung in oder in der Nähe einer vorbestimmten Entfernposition befindet. Im letzteren Fall kann es von dieser Position dann langsam in die vorbestimmte Entfernposition verfahren werden. Dies bietet sich insbesondere bei sehr schnelllaufenden rotierenden Sichelmessern an. Sie kommen in der Regel bei Zigarettenstrangmaschinen zur Anwendung. Diese Messer werden zunächst aus hoher Geschwindigkeit in der Nähe der vorbestimmten Entfernposition gestoppt, und anschließend langsam in die vorbestimmte Entfernposition verfahren. Dabei wird die Entfernposition vorteilhaft derart vorbestimmt, daß sie einer Greifzone einer Vorrichtung zum Ergreifen und Herausziehen des Messers gegenüberliegt. Bei dieser Vorrichtung kann es sich beispielsweise um eine der erfindungsgemäßen Vorrichtungen handeln.

Bei einer weiter vorteilhaft ausgestalteten Ausführungsform des erfindungsgemäßen Verfahrens zum Entfernen des Messers wird vor der Einleitung der vorstehenden Verfahrensschritte der Grad der Abnutzung des Messers erfaßt. Bei dieser Ausführungsform wird das Messer erst dann entfernt, wenn der Grad der Abnutzung ein vorbestimmtes Maß überschritten hat. Bei den bereits angesprochenen rotierenden Sichelmessern läßt sich der Grad der Abnutzung auch anhand eines Zählers feststellen. Der Zähler zählt die Zahl der seit Einführen des Messers in die Messeraufnahme vorgenommenen Messervorschübe zum Ausgleich der Abnutzung des Messers. Erreicht dieser Zähler einen bestimmten Maximalwert, so wird angenommen, daß der Grad der Abnutzung das Entfernen des Messers notwendig macht.

Bei einem vorteilhaften Ausführungsbeispiel des erfindungsgemäßen Verfahrens wird das neue Messer vor dem Einführen einem Messerspeicher entnommen, von dem es linear in eine vorbestimmte Einführposition gebracht wird. Das Verfahren läßt sich beschleunigen, wenn die Messeraufnahme vor dem Einführen des Messers in eine dieser Einführposition gegenüberliegende Einführstellung gebracht wird. Auf diese Weise ist ein unterbrechungsloses Einführen des Messers von dem Messerspeicher bis in die Messeraufnahme möglich. Dabei wird zumindest für die Dauer des Einführens des Messers in die Messeraufnahme eine Bewegung der Messeraufnahme, wie sie durch eine Schneidearbeit des Schneidapparates verursacht sein kann, unterbrochen. Der Zeitpunkt der Unterbrechung wird vorteilhaft so gewählt, daß die Messeraufnahme sich in dem Moment der Unterbrechung in oder in der Nähe der Einführstellung befindet. Auch hier kann bei der zuletzt erwähnten Alternative die Messeraufnahme anschließend langsam in die exakte Einführstellung verfahren werden. Somit kann auch hier die oben erwähnte hohe Rotationsgeschwindigkeit von rotierenden Sichelmessern berücksichtigt werden.

Bei Halterungen zum Halten des Messers in der Messeraufnahme, die die leere Messeraufnahme ganz oder teilweise verschließen, und so das Einführen des Messers vereiteln oder erschweren würden, wird bei einer bevorzugten Ausführungsform die Halterung vor Einführen des neuen Messers - zumindest bis das Messer den entsprechenden Teil der Halterung passiert hat - geöffnet, um das Messer problemlos einführen zu können.

Bei einer weiteren Ausführungsform bildet die Stellung der Messeraufnahme, aus der das alte Messer entfernt werden soll und in welche das neue Messer eingeschoben werden soll, gleichzeitig die Einführstellung für die Messeraufnahme und die Entfernposition für das alte Messer.

Bevorzugt werden alle erfindungsgemäßen Verfahrensschritte vollautomatisch computergesteuert ausgeführt. Hierbei wird die Abarbeitung der einzelnen Verfahrensschritte durch entsprechende Sensoren erfaßt und an die Steuerung weitergegeben.

Ein Ausführungsbeispiel der erfindungsgemäßen Vorrichtung zum Ersetzen eines in einer Messeraufnahme gehaltenen Messers aus der Messeraufnahme weist als Entriegelungseinheit einen auf eine zugeordnete, in der Messeraufnahme zur Halterung des Messers vorgesehene Halteeinheit wirkenden Bolzen auf, welcher Bolzen mittels eines Bolzenantriebes bewegbar ausgebildet ist, um eine zugeordnete, das Messer in der Messeraufnahme festklemmende Andrückrolle der Halteeinheit zumindest während des Entfernens des Messers von dem Messer so zu lösen, daß das Messer von der Entnahmeeinheit aus der Messeraufnahme bewegbar ist. Der Bolzen drückt dabei mit Hilfe des Bolzenantriebes die Andrückrolle von dem Messer weg.

Weitere Ausbildungen der erfindungsgemäßen Vorrichtung zum Ersetzen des Messers weisen als Entnahmeeinheit eine bevorzugt als Klemmeinrichtung zum Einklemmen der Schneide des Messers ausgebildete Greifeinrichtung auf. Bei einer Ausführungsform istdie Klemmeinrichtung dabei fest auf der Vorrichtung installiert, so daß die eigentliche Entnahme durch ein lineares Verfahren der gesamten Vorrichtung mittels eines entsprechenden Linearantriebes bewerkstelligt wird.

Bei einem Ausführungsbeispiel der Vorrichtung weist die Entriegelungseinheit einen auf eine zugeordnete, in der Messeraufnahme vorgesehene Halteeinheit wirkenden Bolzen auf, welcher Bolzen mittels eines Bolzenantriebes bewegbar ausgebildet ist, um einen die Messeraufnahme verschließende Andrückrolle der Halteeinheit zumindest beim Einführen des neuen Messers derart zu lösen, daß das Messer von der Transporteinheit in die Messeraufnahme einführbar ist. Vorteilhaft handelt es sich um dieselbe Entriegelungseinheit, die auch zum Lösen der Andrückrolle bei Entfernen des alten Messers verwendet wird. Auf diese Weise läßt sich die erfindungsgemäße Vorrichtung vereinfachen.

Die Transporteinheit der erfindungsgemäßen Vorrichtung zum Ersetzen der Messeraufnahme weist bevorzugt angetriebene Messertransportrollen auf. Mit deren Hilfe ist das Messer aus einem in Form eines gefedert abgestützten Messerpaketes ausgebildeten Messerspeicher entnehmbar und in die zu bestückende Messeraufnahme einführbar.

Weitere vorteilhafte Ausführungsformen der Erfindung sind in den weiteren Ansprüchen angegeben.

Im folgenden wird die Erfindung anhand der Zeichnung näher beschrieben.

Die Zeichnungen zeigen:
- Fig. 1: eine Ausführungsform einer erfindungsgemäßen Vorrichtung zum Ersetzen eines Messers mit einem neuen Messer in einer teilweise geschnittenen Aufsicht;
- Fig. 2: die Vorrichtung der Fig. 1 in einer teilweise geschnittenen Seitenansicht; und
- Fig. 3: ein Ablaufdiagramm eines Ausführungsbeispiels eines Verfahrens für den Messerwechsel.

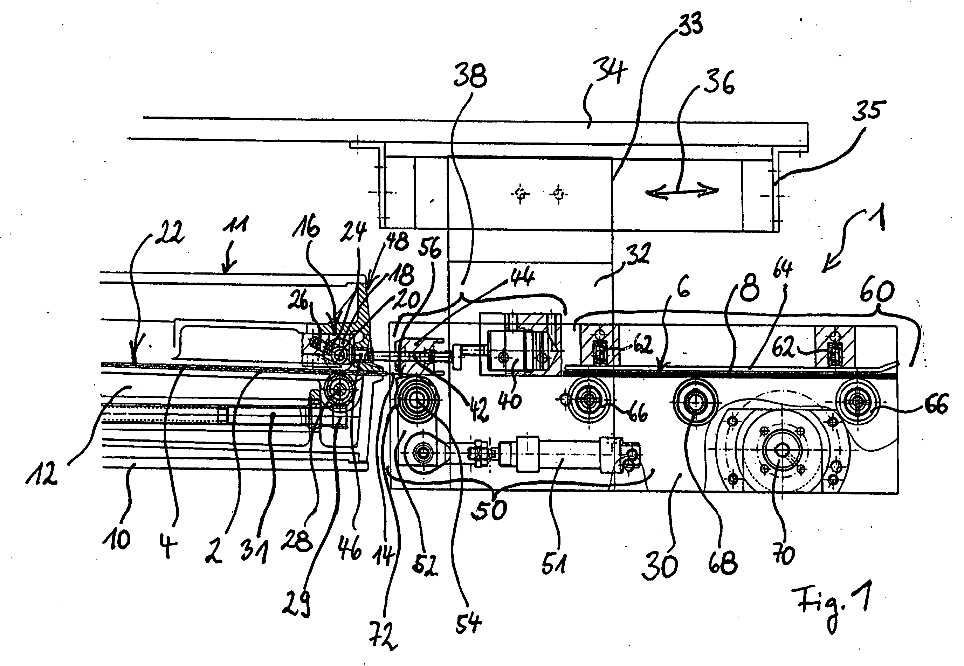

Der Aufbau der in der Fig. 1 dargestellten Vorrichtung, im folgenden Messerwechselvorrichtung 1 genannt, ist wie folgt:

Die Messerwechselvorrichtung 1 dient zum Ersetzen eines in einer Messeraufnahme 4 gehaltenen alten Messers 2 mit einem neuen Messer 6 aus einem Messerspeicher 8.

Die Messeraufnahme 4 ist in einem Gehäuse 10 eines nur teilweise dargestellten Schneidapparates 12 vorgesehen. Bei dem Schneidapparat 12 handelt es sich um eine schnell rotierende Trommel 11, die mit Hilfe des Messers 2 einen nicht dargestellten und senkrecht zu der Schneide 14 des Messers 2 verlaufenden, endlosen Zigarettenstrang in Doppelzigaretten zerschneidet. Der Schneidapparat 12 ist Bestandteil einer nicht dargestellten Zigarettenstrangmaschine zur Herstellung derartiger Zigarettenstränge. Solche Schneidapparate sind beispielsweise in den US-Patentschriften 3,830,126, 3,815,460, 3,476,002 sowie 3,140,632 offenbart. Auch aus der DE 38 35 314 C2 sind derartige Schneidapparate bekannt. Bezüglich der Details von Schneidapparaten sei daher auf die vorgenannten Druckschriften verwiesen. Der Schneidapparat 12 weist darüber hinaus eine als Halterung des Messers 2 in der Messeraufnahme 4 dienende Halteeinheit 16 auf. Die Halteeinheit 16 weist eine das Messer 2 in der Messeraufnahme 4 festklemmende Andrückrolle 18 auf. Die Achse 20 der Andrückrolle 18 ist in einem in einem spitzen Winkel zu der Oberfläche 22 des Messers 2 ausgebildeten Kanal 24 geführt. Die Achse 20 steht dabei unter der Federspannung einer Feder 26, die die Achse 20 und somit die Andrückrolle 18 in Richtung auf die Oberfläche 22 des Messers 2 drückt. Dadurch klemmt die Andrückrolle 18 das Messer 2 zwischen sich und einer auf der gegenüberliegenden Seite des Messers 2 angeordneten zweiten Andrückrolle 28 ein. Die zweite Andrückrolle 28 ist stationär gelagert und steht über einem Winkeltrieb 29 mit einer Spindel 31 in Wirkverbindung. Durch Drehung der Spindel 31 läßt sich die Andrückrolle 28 drehen und das Messer 2 entsprechend dem Verschleiß in der Messeraufnahme 4 vorschieben, um die Schneide 14 immer in Schneidposition zu halten und es bei Rotation der Trommel 11 in Kontakt mit einer (nicht dargestellten) Messerschleiferei zu bringen.

Dem Schneidapparat 12 zugeordnet ist die Messerwechselvorrichtung 1. Die Messerwechselvorrichtung 1 weist eine Grundplatte 30 auf. Die Grundplatte 30 ist mit einer Verbindungsplatte 32 mit einem Gehäuseteil 34 der nicht dargestellten Zigarettenstrangmaschine verbunden. Die Verbindungsplatte 32 ist jedoch zusammen mit der Grundplatte 30 linear in Richtung auf den Schneidapparat 12 zu und von diesem weg gemäß Doppel-Pfeil 36 mit Hilfe eines nicht dargestellten Antriebes verfahrbar.

Auf der Grundplatte 30 der Messerwechselvorrichtung 1 ist eine Entriegelungseinheit 38 zum Lösen der Halterung des Messers 2 in der Messeraufnahme 4 vorgesehen. Die Entriegelungseinheit 38 weist einen Einschraubzylinder 40 und ein mit dessen Hilfe linear verfahrbaren Bolzen 42 auf. Der als Bolzenantrieb für den Bolzen 42 vorgesehene Einschraubzylinder 40, der fest auf der Grundplatte 30 angeschraubt ist, kann den Bolzen 42 linear in einer Führung 44 auf den Schneidapparat 12 zu verschieben. Die Anordnung der Messerwechselvorrichtung 1 an dem Gehäuseteil 34 der Zigarettenstrangmaschine ist derart, daß der Bolzen 42 direkt gegenüber einer Öffnung 46 in der Oberfläche 48 des Gehäuses 10 des Schneidapparates 12 liegt. In seinem maximal ausgefahren Zustand kann der Bolzen 42 auf die Achse 20 der Andrückrolle 18 einwirken und die Andrückrolle 18 gegen die Kraft der Feder 26 entlang des Kanals 24 zurückschieben, so daß die Klemmung des Messers 2 zwischen der Andrückrolle 18 und der zweiten Andrückrolle 28 aufgehoben wird.

Auf der Grundplatte 30 weist die Messerwechselvorrichtung 1 darüber hinaus eine Entnahmeeinheit 50 zum Bewegen des Messers 2 aus der Messeraufnahme 4 heraus auf. Die Entnahmeeinheit 50 weist einen mit Hilfe eines Zylinders 51 um eine Achse 54 schwenkbaren Klemmhebel 52 auf. Der Klemmhebel 52 weist eine der Führung 44 der Entriegelungseinheit 38 zugewandte Oberfläche 56 auf. In der in der Fig. 1 dargestellten Position der Messerwechselvorrichtung 1 wird die Schneide 14 des Messers 2 beim Ausfahren des Zylinders 51 und durch das sich daraus ergebende Verschwenken des Klemmhebels 52 um die Schwenkachse 54 zwischen der Oberfläche 56 und der Führung 44 eingeklemmt.

Weiterhin befindet sich auf der Grundplatte 30 der Messerwechselvorrichtung 1 eine Transporteinheit 60. Die Transporteinheit 60 dient zum Einführen eines neuen Messers 6 in die Messeraufnahme 4. Die Transporteinheit 60 weist einen Messerspeicher 8 auf, in welchem neue Messer 6 mit Hilfe eines mittels Federn 62 gefedert abgestützten Messertabletts 64 in Form eines Messerpaketes gespeichert sind. Das Messertablett 64 drückt das Messerpaket gegen als Rollen ausgebildete Messergegenlager 66 und eine zwischen den Messergegenlagern 66 angeordnete Transportrolle 68. Mit Hilfe der durch einen Antrieb 70 angetriebenen Messertransportrolle 68 läßt sich ein neues Messer 6 des Messerpaketes aus dem Messerspeicher 8 heraus in Richtung auf die Messeraufnahme 4 verfahren. Weiterhin weist die Transporteinheit 60 eine zweite Messertransportrolle 72 auf, die ebenfalls durch einen Antrieb 70 im Gleichlauf mit der Messertransportrolle 68 angetrieben wird. Der Achsabstand der Messertransportrollen 68 und 72 ist etwas kürzer als die Länge eines Messers 6, so daß das neue Messer 6 ständig geführt in die Messeraufnahme 4 eingeschoben werden kann.

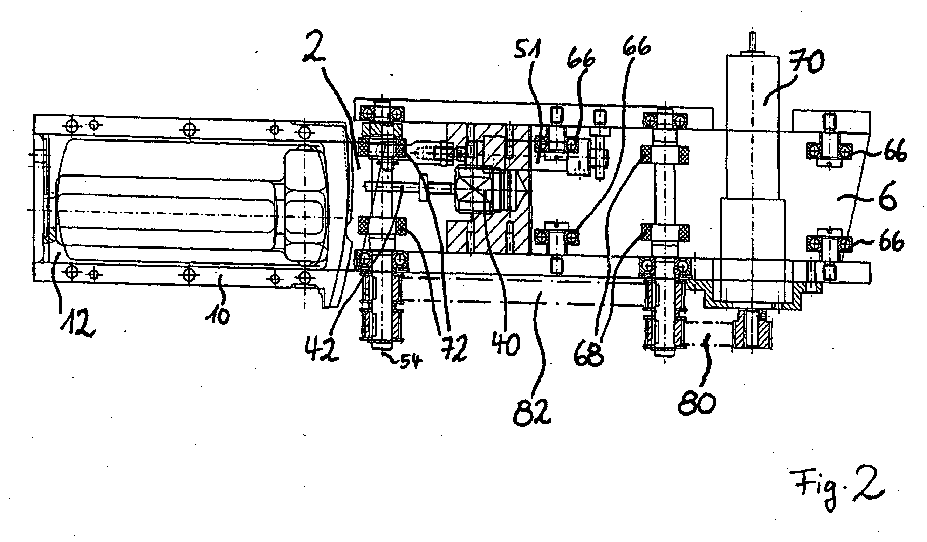

Fig. 2 zeigt die Messereinwechseleinheit 1 der Fig. 1 in einer Seitenansicht. Teile, die denen der Fig. 1 ensprechen, sind in der Fig. 2 mit den gleichen Bezugszeichen bezeichnet. Darüber hinaus zeigt die Fig. 2 die Antriebsriemen 80 bzw. 82 zur Übertragung der Antriebskraft des Antriebes 70 auf die Transportrollen 68 bzw. 72.

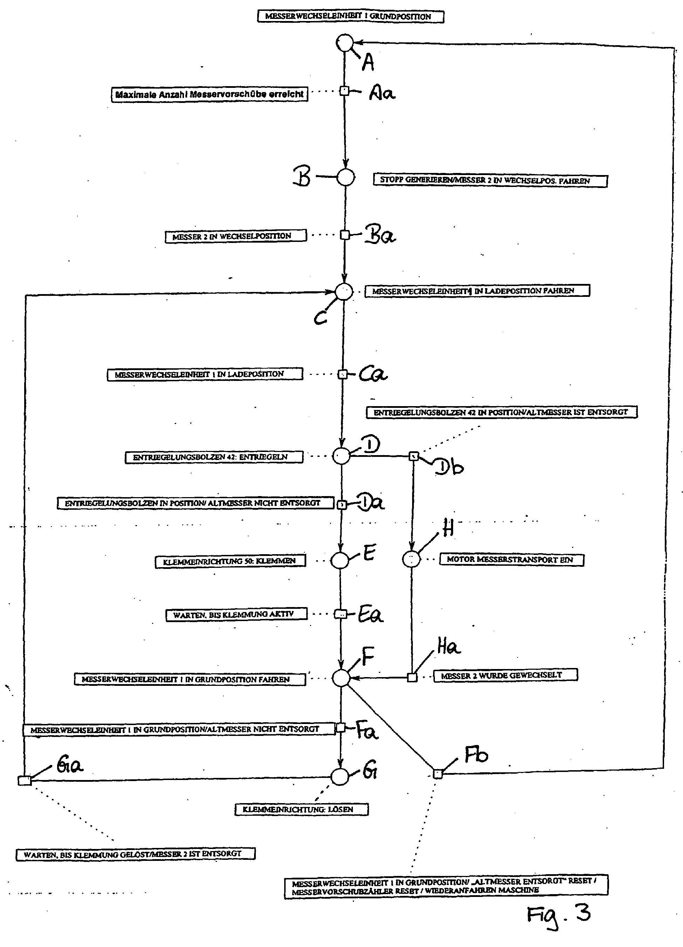

Fig. 3 stellt schematisch den Ablauf eines Ausführungsbeispiels des erfindungsgemäßen Verfahrens zum Ersetzen eines Messers 2 mit einem neuen Messer 6 dar. Das Verfahren wird mit der Vorrichtung der Fig. 1 und 2 durchgeführt, so daß auch die dortigen Bezugszeichen zur Erleichterung des Verständnisses verwendet werden. Zur Vereinfachung der Darstellung sind in das schematische Ablaufdiagramm bei jedem Verfahrensschritt die den Verfahrensschritt im wesentlichen ausführende Einheit der Fig. 1 und 2 und die Tätigkeit jeder Einheit stichwortartig angeführt.

Im Schritt A befindet sich die Messerwechselvorrichtung 1 in einer zu dem Schneidapparat 12 beabstandeten Grundposition. In der Grundposition befindet sich eine Hinterkante 33 der Verbindungsplatte 32 benachbart zu einem Endstück 35 des Gehäuseteils 34.

In dem Schritt Aa wird mittels eines Zählers, der bevorzugt Bestandteil einer Computersteuerung für die Zigarettenstrangmaschine ist, festgestellt, ob eine vorgegebene, maximale Anzahl von Messervorschüben des Messers 2 erreicht wurde. Ist dies der Fall, wird die Messerwechselvorrichtung 1 aus der Grundposition gemäß Pfeil 36 (Fig. 1) linear in eine Messererkennungsposition in unmittelbarer Nachbarschaft zu dem Schneidapparat 12 verfahren. In dieser Messererkennungsposition kann die Messerwechselvorrichtung 1 mit Hilfe beispielsweise einer Lichtschrankenerkennung ein zu ersetzendes, altes Messer 2 erkennen.

Ist dies der Fall, so wird der Schneidapparat 12 derart angehalten, daß sich das zu entfernende Messer 2 in einer vorbestimmten Position befindet. Gleichzeitig wird auch die Zigarettenstrangmaschine angehalten (Schritt B). Anschließend wird das Messer 2 langsam in eine genaue Wechselposition verfahren. In dem Schritt Ba befindet sich das Messer 2 in der genauen Wechselposition.

Anschließend fährt die Messerwechselvorrichtung 1 weiter gemäß Pfeil 36 (Fig. 1) in eine dicht an dem zu entfernenden Messer 2 liegende Ladeposition (Schritt C). In dem Schritt Ca befindet sich die Verbindungsplatte 32 mit der Messerwechselvorrichtung 1 in der in der Fig. 1 dargestellten Ladeposition.

Im Schritt D wird der Antriebszylinder 40 aktiviert, so daß der Entriegelungsbolzen 42 die Halterung des Messers 2 in der Messeraufnahme 4 mit Hilfe der Halteeinheit 16 durch Lösen der Andrückrolle 18 löst. Die oben angesprochene Lichtschranke stellt dabei immer noch fest, daß das alte Messer 2 noch nicht aus der Messeraufnahme 4 entsorgt wurde (Schritt Da).

Dann wird in dem Schritt E mit Hilfe der Klemmeinrichtung 50 das zu entfernende Messer 2 zwischen der Oberfläche 56 des Klemmhebels 52 und der Führung 44 der Entriegelungseinheit 38 eingeklemmt. Mit Hilfe eines Sensors wird in dem Schritt Ea geprüft, ob die Klemmung des Messers 2 aktiv ist.

Bejahendenfalls wird in dem Schritt F die Messerwechselvorrichtung 1 erneut zurück in die zu dem Schneidapparat 12 beabstandete Grundposition gefahren.

In dem Schritt Fa wird festgestellt, ob die Messerwechselvorrichtung 1 sich in der Grundposition befindet und ein zu entfernendes Messer 2 von der Klemmeinrichtung 50 eingeklemmt gehalten wird.

In dem Schritt G wird die Klemmwirkung der Klemmeinrichtung 50 gelöst.

In dem Schritt Ga wird geprüft, ob die Klemmeinrichtung 50 die Klemmung gelöst hat. Anschließend wird mit Hilfe der Transporteinheit 60, d.h. insbesondere mit der Transportrolle 72 das zu entfernende Messer 2 kurz zurück in Richtung auf den Schneidapparat 12 gefördert, so daß es von der Messerwechselvorrichtung 1 abfällt. Mit Hilfe eines Sensors wird dann geprüft, ob das alte Messer 2 abgefallen ist.

Bejahendenfalls fährt im Anschluß daran gemäß Schritt C die Messerwechselvorrichtung 1 erneut in die benachbart zum Schneidapparat 12 liegende Ladeposition gemäß Fig. 1. Wiederum wird in dem Schritt Ca geprüft, ob sich die Messerwechselvorrichtung 1 in der Ladeposition befindet. Erneut wird mit Hilfe des Entriegelungsbolzens 42 die Andrückrolle 18 in dem Schritt D entriegelt.

Stellt ein Sensor fest, daß sich kein zu entfernendes Messer mehr in der Messeraufnahme 4 befindet, so gelangt das Verfahren in den Schritt Db. Der Entriegelungsbolzen 42 wird weiterhin in der die Andrückrolle 18 zu entriegelnden Position gehalten und es wird in dem Schritt H der Antrieb 70 für die Messertransportrollen 68 und 72 eingeschaltet und ein neues Messer 6 aus dem Messerspeicher 8 in die nun leere Messeraufnahme 4 vollständig eingeschoben.

Anschließend wird in dem Schritt Ha mittels eines Sensors festgestellt, ob sich das neue Messer 6 vollständig in der Messeraufnahme 4 befindet.

Ist dies der Fall, gelangt das Verfahren in den Schritt Fb, in welchem die Messerwechselvorrichtung 1 erneut in die Grundposition gefahren wird, der Messervorschubzähler zurückgesetzt wird, der Sensor zum Erfassen der Entsorgung des zu entfernenden Messers zurückgesetzt, und schließlich die Zigarettenstrangmaschine und der Schneidapparat 12 wieder angefahren wird. Das neue Messer 6 befindet sich bevorzugt derart in der Messeraufnahme 4, daß eine voreingestellte Messerschleiferei zum Nachschleifen der Messer sofort wieder tätig werden kann.

## Patentansprüche

1. Verfahren zum Ersetzen eines in einer Messeraufnahme (4) eines Schneidapparates (12) zum Schneiden von Zwischenprodukten der tabakverarbeitenden Industrie gehaltenen, zu ersetzenden Messers (2) mit einem neuen Messer (6),
mit den Schritten:
- die Halterung (16) des zu ersetzenden Messers (2) in der Messeraufnahme (4) wird vor dem Entfernen des zu ersetzenden Messers (2) mit einer Entriegelungseinheit (38) automatisch gelöst,
- das zu ersetzende Messer (2) wird zum Entfernen aus der Messeraufnahme (4) mit einer Entnahmeeinheit (50) bewegt,
- das neue Messer (6) wird zum Bestücken der Messeraufnahme (4) mit einer Transporteinheit (60) in diese eingeführt.

2. Verfahren nach Anspruch 1,
mit den weiteren Schritten:
- das zu ersetzende Messer (2) wird vor dem Entfernen, bevorzugt nach dem Lösen der Halterung (16), mit einer Greifeinrichtung (51, 52) ergriffen,
- das ergriffene Messer (2) wird aus der Messeraufnahme (4) im wesentlichen linear herausgezogen,
- das herausgezogene Messer (2) wird einer Entsorgungsposition zugeführt und freigegeben.

3. Verfahren nach Anspruch 2,
mit dem weiteren Schritt:
- das zu ersetzende Messer (2) wird zum Ergreifen an seiner Schneide (14), mit einer Klemmeinrichtung (56) eingeklemmt.

4. Verfahren nach einem der vorstehenden Ansprüche,
mit dem weiteren Schritt:
- das zu ersetzende Messer (2) wird vor dem Entfernen in eine vorbestimmte Entfernposition gebracht.

5. Verfahren nach einem der vorstehenden Ansprüche,
mit dem weiteren Schritt:
- eine Schneidearbeit des zu ersetzenden Messers (2) wird vor dem Entfernen desselben zumindest für die Dauer des Entfernens unterbrochen.

6. Verfahren nach Anspruch 5,
mit dem weiteren Schritt:
- der Zeitpunkt der Unterbrechung wird derart gewählt, daß das zu ersetzende Messer (2) sich in dem Moment der Unterbrechung in oder in der Nähe einer vorbestimmten Entfernposition befindet.

7. Verfahren nach einem der Ansprüche 4 oder 6,
mit dem weiteren Schritt:
- die Entfernposition wird derart vorbestimmt, daß sie einer Greifzone einer Vorrichtung (50) zum Ergreifen und Herausziehen des zu ersetzenden Messers (2) gegenüberliegt.

8. Verfahren nach einem der vorstehenden Ansprüche,
mit den weiteren Schritten:
- der Grad der Abnutzung des Messers (2) wird vor Einleitung der vorstehenden Schritte erfaßt,
- das zu ersetzende Messer (2) wird entfernt, wenn der Grad der Abnutzung ein vorbestimmtes Maß überschritten hat.

9. Verfahren nach einem der vorstehenden Ansprüche
mit dem weiteren Schritt:
- das neue Messer (6) wird nach dem Einführen automatisch in der Messeraufnahme (4) gehalten.

10. Verfahren nach einem der vorstehenden Ansprüche,
mit den weiteren Schritten:
- das neue Messer (6) wird vor dem Einführen einem Messerspeicher (8) entnormen,
- das neue Messer (6) wird vor dem Einführen aus dem Messerspeicher (8) im wesentlichen linear in eine vorbestimmte Einführposition gebracht.

11. Verfahren nach Anspruch 10,
mit dem weiteren Schritt:
- die Messeraufnahme (4) wird vor dem Einführen des neuen Messers (6) in eine der Einführposition des neuen Messers (6) gegenüberliegende Einführstellung gebracht.

12. Verfahren nach einem der vorstehenden Ansprüche
mit dem weiteren Schritt:
- zumindest eine durch eine Schneidearbeit des Schneidapparates (12) verursachte Bewegung der Messeraufnahme (4) wird vor dem Einführen des neuen Messers (6) zumindest für die Dauer des Einführens des neuen Messers (6) unterbrochen.

13. Verfahren nach Anspruch 12,
mit dem weiteren Schritt:
- der Zeitpunkt der Unterbrechung wird derart gewählt, daß die Messeraufnahme (4) sich in dem Moment der Unterbrechung in oder in der Nähe der Einführstellung befindet.

14. Verfahren nach einem der vorstehenden Ansprüche
mit dem weiteren Schritt:
- zum Einführen des neuen Messers (6) wird eine das neue Messer (6) nach dem Einführen in der Messeraufnahme (4) haltende Halterung (16) gelöst.

15. Verfahren nach Anspruch 6 und einem der vorstehenden Ansprüche,

16. Verfahren nach einem der vorstehenden Ansprüche,
wobei anstelle des Lösens der Halterung (16) des zu entfernenden Messers (2) und/oder des Haltens des neuen Messers (6) oder neben dem Lösen der Halterung (16) und/oder des Haltens des neuen Messers (6) mindestens ein weiterer der genannten Schritte automatisch, bevorzugt computergesteuert, ausgeführt wird.
wobei sich die Messeraufnahme (4), wenn sich das aus der Messeraufnahme (4) zu entfernende Messer (2) in der Entfernposition befindet, in der Einführstellung befindet.

17. Vorrichtung zum Ersetzen eines in einer Messeraufnahme (4) eines Schneidapparates (12) zum Schneiden von Zwischenprodukten der tabakverarbeitenden Industrie gehaltenen zu ersetzenden Messers (2) mit einem neuen Messer (6),
**gekennzeichnet durch**
eine Entriegelungseinheit (38) zum Lösen der Halterung (16) des zu ersetzenden Messers (2) in der Messeraufnahme (4),
eine Entnahmeeinheit (50) zum Entfernen des zu ersetzenden Messers (2) aus der Messeraufnahme (4), und
eine Transporteinheit (60) zum Einführen des neuen Messers (6) in die Messeraufnahme (4).

18. Vorrichtung nach Anspruch 17,
wobei die Entriegelungseinheit (38) einen auf eine zugeordnete, in der Messeraufnahme (4) zur Halterung des zu ersetzenden Messers (2) vorgesehene Halteeinheit (16) wirkenden Bolzen (42) aufweist, welcher Bolzen (42) mittels eines Bolzenantriebes (40) bewegbar ausgebildet ist, um eine zugeordnete, das zu ersetzende Messer (2) in der Messeraufnahme (4) festklemmende Andrückrolle (18) der Halteeinheit (16) zumindest während des Entfernens des zu ersetzenden Messers (2) von dem zu ersetzenden Messer (2) so zu lösen, daß das zu ersetzende Messer (2) von der Entnahmeeinheit (50) aus der Messeraufnahme (4) bewegbar ist.

19. Vorrichtung nach einem der Ansprüche 17 oder 18,
wobei die Entnahmeeinheit (50) eine Greifeinrichtung (51, 52) zum Greifen des zu ersetzenden Messers (2) aufweist.

20. Vorrichtung nach Anspruch 19,
wobei die Greifeinrichtung (51, 52) eine Klemmeinrichtung (56) zum Einklemmen der Schneide (14) des zu ersetzenden Messers (2) aufweist.

21. Vorrichtung nach einem der Ansprüche 17 bis 20,
wobei die Vorrichtung mittels eines Antriebes im wesentlichen linear verfahrbar ist, um ein mittels der Klemmeinrichtung (56) ergriffenes, zu ersetzendes Messer (2) aus der Messeraufnahme (4) herauszuziehen.

22. Vorrichtung nach deinem der Ansprüche 17 bis 21,
wobei eine Entriegelungseinheit (38) vorgesehen ist, zum Lösen einer das neue Messer (6) nach dem Einführen in der Messeraufnahme (4) haltenden Halterung (16) beim Einführen des neuen Messers (6).

23. Vorrichtung nach Anspruch 22,
wobei die Entriegelungseinheit (38) einen auf eine zugeordnete, in der Messeraufnahme (4) zur Halterung des neuen Messers (2) vorgesehene Halteeinheit (16) wirkenden Bolzen (42) aufweist,
welcher Bolzen (42) mittels eines Bolzenantriebes (40) bewegbar ausgebildet ist, um eine die Messeraufnahme (4) verschließende Andrückrolle (18) der Halteeinheit (16) zumindest beim Einführen des neuen Messers (6) so zu lösen, daß das neue Messer (6) von der Transporteinheit (60) in die Messeraufnahme (4) einführbar ist.

24. Vorrichtung nach einem der Ansprüche 22 oder 23,
wobei ein Messerspeicher (8) vorgesehen ist, dem von der Transporteinheit (60) das neue Messer (6) entnehmbar ist.

25. Vorrichtung nach Anspruch 24,
wobei die Transporteinheit (60) angetriebene Messertransportrollen (68, 72) aufweist, mit deren Hilfe das neue Messer (6) aus dem bevorzugt in Form eines gefedert abgestützten Messerpaketes ausgebildeten Messerspeicher (8) entnehmbar und in die zu bestückende Messeraufnahme (4) einführbar ist.

26. Vorrichtung nach Anspruch 22 und einem der Ansprüche 17 bis 25,
wobei nur eine Entriegelungseinheit (38) vorgesehen ist, die sowohl zum Entfernen des zu ersetzenden Messers (2) aus der Messeraufnahme (4) als auch zum Einführen des neuen Messers (6) in die Messeraufnahme (4) das Lösen der Halterung (16) in der Messeraufnahme (4), bevorzugt durch denselben Bolzen (42), bewirkt.

## Claims

1. Method of replacing, with a new knife (6), a knife (2) which is held in a knife receptacle (4) belonging to a cutting apparatus (12) for cutting intermediate products in the tobacco-processing industry and which is to be replaced,
said method comprising the following steps:
- the device (16) for holding the knife (2) which is to be replaced in the knife receptacle (4) is automatically released, prior to the removal of said knife (2) which is to be replaced, by means of an unlocking unit (38);
- the knife (2) which is to be replaced is moved for the purpose of removing it from the knife receptacle (4) by means of an extracting unit (50); and
- for the purpose of equipping the knife receptacle (4), the new knife (6) is introduced into the latter by means of a transporting unit (60).

2. Method according to claim 1,
comprising the following additional steps:
- the knife (2) which is to be replaced is grasped, prior to removal and preferably after the releasing of the holding device (16), by means of a gripping arrangement (51, 52);
- the knife (2) which has been grasped is pulled out of the knife receptacle (4) in a substantially linear manner; and
- the knife (2) which has been pulled out is conveyed to a disposal position and released.

3. Method according to claim 2,
comprising the following additional step:
- for the purpose of grasping it at its cutting edge (14), the knife (2) which is to be replaced is clamped in by means of a clamping arrangement (56).

4. Method according to one of the preceding claims, comprising the following additional step:
- the knife (2) which is to be replaced is brought, prior to removal, into a predetermined removing position.

5. Method according to one of the preceding claims, comprising the following additional step:
- a cutting operation by the knife (2) which is to be replaced is interrupted, prior to the removal of the latter, at least for the duration of the removing operation.

6. Method according to claim 5,
comprising the following additional step:
- the point in time at which interruption occurs is chosen in such a way that the knife (2) which is to be replaced is at or near a predetermined removing position at the moment of interruption.

7. Method according to either of claims 4 or 6, comprising the following additional step:
- the removing position is predetermined in such a way that it lies opposite a gripping zone of a device (50) for grasping and pulling out the knife (2) which is to be replaced.

8. Method according to one of the preceding claims, comprising the following additional steps:
- the degree of wear of the knife (2) is determined before the preceding steps are initiated; and
- the knife (2) which is to be replaced is removed if the degree of wear has exceeded a predetermined extent.

9. Method according to one of the preceding claims, comprising the following additional step:
- after being introduced, the new knife (6) is held in the knife receptacle (4) automatically.

10. Method according to one of the preceding claims, comprising the following additional steps:
- the new knife (6) is extracted from a knife store (8) prior to its introduction; and
- prior to its introduction, the new knife (6) is brought out of the knife store (8) and into a predetermined position of introduction in a substantially linear manner.

11. Method according to claim 10,
comprising the following additional step:
- prior to the introduction of the new knife (6), the knife receptacle (4) is brought into an introducing position that lies opposite the position of introduction of the new knife (6).

12. Method according to one of the preceding claims, comprising the following additional step:
- at least one movement of the knife receptacle (4) which is caused by a cutting operation of the cutting apparatus (12) is interrupted, prior to the introduction of the new knife (6), at least for the duration of said introduction of the new knife (6).

13. Method according to claim 12,
comprising the following additional step:
- the point in time at which the interruption occurs is chosen in such a way that the knife receptacle (4) is at or near the introducing position at the moment said interruption occurs.

14. Method according to one of the preceding claims, comprising the following additional step:
- for the purpose of introducing the new knife (6), a holding device (16), which holds said new knife (6) in the knife receptacle (4) after its introduction, is released.

15. Method according to claim 6 and one of the preceding claims,
wherein the knife receptacle (4) is in the introducing position when the knife (2) which is to be removed from said knife receptacle (4) is in the removing position.

16. Method according to one of the preceding claims,
wherein, instead of the releasing of the device (16) for holding the knife (2) which is to be removed, and/or instead of the holding of the new knife (6) or in addition to the releasing of said holding device (16), and/or instead of the holding of the new knife (6), at least one other of the steps mentioned is carried out automatically, preferably in a computer-controlled manner.

17. Device for replacing, with a new knife (6), a knife (2) which is held in a knife receptacle (4) belonging to a cutting apparatus (12) for cutting intermediate products in the tobacco-processing industry and which is to be replaced,
**characterised by**
an unlocking unit (38) for releasing the device (16) for holding the knife (2) which is to be replaced in the knife.receptacle (4),
an extracting unit (50) for removing the knife (2) which is to be replaced from said knife receptacle (4), and
a transporting unit (60) for introducing the new knife (6) into said knife receptacle (4).

18. Device according to claim 17,
wherein the unlocking unit (38) has a bolt (42) which acts upon an associated holding unit (16) provided in the knife receptacle (4) for the purpose of holding the knife (2) which is to be replaced, which bolt (42) is constructed so as to be movable by means of a bolt drive (40) in order to release an associated pressure-applying roller (18) belonging to the holding unit (16), which roller clamps the knife (2) which is to be replaced fast in the knife receptacle (4), from said knife (2) which is to be replaced, at least during the removal of the latter, in such a way that said knife (2) which is to be replaced can be moved out of the knife receptacle (4) by the extracting unit (50).

19. Device according to either of claims 17 or 18,
wherein the extracting unit (50) has a gripping arrangement (51, 52) for gripping the knife (2) which is to be replaced.

20. Device according to claim 19,
wherein the gripping arrangement (51, 52) has a clamping arrangement (56) for clamping-in the cutting edge (14) of the knife (2) which is to be replaced.

21. Device according to one of claims 17 to 20,
wherein said device can be moved in a substantially linear manner by means of a drive in order to pull a knife (2) which is to be replaced and which has been grasped by means of the clamping arrangement (56), out of the knife receptacle (4).

22. Device according to one of claims 17 to 21,
wherein an unlocking unit (38) is provided for the purpose of releasing a holding device (16), which holds the new knife (6) in the knife receptacle (4) after its introduction, when said new knife (6) is introduced.

23. Device according to claim 22,
wherein the unlocking unit (38) has a bolt (42) which acts upon an associated holding unit (16) provided in the knife receptacle (4) for the purpose of holding the new knife (2),
which bolt (42) is constructed so as to be movable by means of a bolt drive (40) in order to release a pressure-applying roller (18) belonging to the holding unit (16), which roller occludes the knife receptacle (4), at least when the new knife (6) is introduced, in such a way that said new knife (6) can be introduced into the knife receptacle (4) by the transporting unit (60).

24. Device according to either of claims 22 or 23,
wherein a knife store (8) is provided, from which the new knife (6) can be extracted by the transporting unit (60).

25. Device according to claim 24,
wherein the transporting unit (60) has knife-transporting rollers (68, 72) which are driven and with the aid of which the new knife (6) can be extracted from the knife store (8), which is preferably constructed in the form of a bundle of knives supported in a sprung manner, and can be introduced into the knife receptacle (4) which is to be equipped.

26. Device according to claim 22 and one of claims 17 to 25,
wherein only one unlocking unit (38) is provided, which brings about the releasing of the holding device (16) in the knife receptacle (4), preferably by the same bolt (42), both for the purpose of removing the knife (2) which is to be replaced from the knife receptacle (4) and for the purpose of introducing the new knife (6) into said knife receptacle (4).

## Revendications

1. Procédé pour remplacer par une lame neuve (6), une lame à remplacer (2), retenue dans un porte-lame (4) d'une découpeuse (12) destinée à découper des produits intermédiaires de l'industrie de transformation du tabac,
comprenant les étapes suivantes :
- l'élément de retenue (16) de la lame à remplacer (2) dans le porte-lame (4) est, avant l'enlèvement de la lame à remplacer (2), desserré automatiquement à l'aide d'une unité de déverrouillage (38),
- la lame à remplacer (2), afin d'être enlevée du porte-lame (4), est déplacée à l'aide d'une unité d'enlèvement (50),
- la lame neuve (6) est, pour venir garnir le porte-lame (4), introduite dans ce dernier à l'aide d'une unité de transport (60).

2. Procédé selon la revendication 1, -
comprenant les étapes supplémentaires suivantes :
- la lame à remplacer (2) est, avant l'enlèvement, de préférence après le desserrage de l'élément de retenue (16), saisie à l'aide d'un mécanisme de préhension (51, 52),
- la lame saisie (2) est extraite du porte-lame (4) dans une direction sensiblement linéaire,
- la lame extraite (2) est amenée à un emplacement de mise au rebut et y est libérée.

3. Procédé selon la revendication 2,
comprenant l'étape supplémentaire suivante :
- la lame à remplacer (2), afin d'être saisie au niveau de son tranchant (14), est enserrée à l'aide d'un mécanisme de serrage (56).

4. Procédé selon l'une des revendications précédentes,
comprenant l'étape supplémentaire suivante :
- la lame à remplacer (2) est, avant l'enlèvement, amenée en un emplacement prédéterminé d'enlèvement.

5. Procédé selon l'une des revendications précédentes,
comprenant l'étape supplémentaire suivante :
- une opération de découpage par la lame à remplacer (2) est interrompue avant l'enlèvement de cette dernière, au moins pour la durée de l'enlèvement.

6. Procédé selon la revendication 5,
comprenant l'étape supplémentaire suivante :
- l'instant de l'interruption est choisi de telle manière que la lame à remplacer (2) se trouve en un emplacement prédéterminé d'enlèvement ou au voisinage d'un tel emplacement, au moment de l'interruption.

7. Procédé selon l'une des revendications 4 ou 6,
comprenant l'étape supplémentaire suivante :
- l'emplacement d'enlèvement est prédéterminé de manière à se situer en vis-à-vis d'une zone de préhension d'un dispositif (50) destiné à saisir et extraire la lame à remplacer (2).

8. Procédé selon l'une des revendications précédentes,
comprenant les étapes supplémentaires suivantes :
- le degré d'usure de la lame (2) est détecté avant le déclenchement des étapes précédentes,
- la lame à remplacer (2) est enlevée lorsque le degré d'usure a dépassé un niveau prédéterminé.

9. Procédé selon l'une des revendications précédentes,
comprenant l'étape supplémentaire suivante :
- la lame neuve (6) est, après l'introduction, retenue automatiquement dans le porte-lame (4).

10. Procédé selon l'une des revendications précédentes,
comprenant les étapes supplémentaires suivantes :
- la lame neuve (6) est, avant l'introduction, prélevée dans un magasin à lames (8),
- la lame neuve (6) est, avant l'introduction, amenée du magasin à lames (8) jusque dans un emplacement prédéterminé d'introduction, dans une direction sensiblement linéaire.

11. Procédé selon la revendication 10,
comprenant l'étape supplémentaire suivante :
- le porte-lame (4) est, avant l'introduction de la lame neuve (6), amené dans une position d'introduction en vis-à-vis de l'emplacement d'introduction de la lame neuve (6).

12. Procédé selon l'une des revendications précédentes,
comprenant l'étape supplémentaire suivante :
- au moins un déplacement du porte-lame (4), provoqué par une opération de découpage de la découpeuse (12), est, avant l'introduction de la lame neuve (6), interrompu au moins pour la durée de l'introduction de la lame neuve (6).

13. Procédé selon la revendication 12,
comprenant l'étape supplémentaire suivante :
- l'instant de l'interruption est choisi de telle manière que le porte-lame (4) se trouve dans la position d'introduction ou au voisinage de cette position au moment de l'interruption.

14. Procédé selon l'une des revendications précédentes,
comprenant l'étape supplémentaire suivante :
- pour l'introduction de la lame neuve (6), un élément de retenue (16) retenant la lame neuve (6) dans le porte-lame (4) après son introduction, est desserré.

15. Procédé selon la revendication 6 et l'une des revendications précédentes,
selon lequel, lorsque la lame (2) à enlever du porte-lame (4) se trouve à l'emplacement d'enlèvement, le porte-lame (4) se trouve dans la position d'introduction.

16. Procédé selon l'une des revendications précédentes,
selon lequel à la place du desserrage de l'élément de retenue (16) de la lame (2) à enlever et/ou du maintien de la lame neuve (6), ou bien en plus du desserrage de l'élément de retenue (16) et/ou du maintien de la lame neuve (6), au moins une autre des étapes mentionnées est exécutée automatiquement, de préférence d'une façon assistée par ordinateur.

17. Dispositif pour le remplacement par une lame neuve (6), d'une lame à remplacer (2) retenue dans un porte-lame (4) d'une découpeuse (12) destinée à découper des produits intermédiaires de l'industrie de transformation du tabac,
**caractérisé par**
- une unité de déverrouillage (38) destinée à desserrer l'élément de retenue (16) de la lame à remplacer (2) dans le porte-lame (4),
- une unité d'enlèvement (50) destinée à enlever la lame à remplacer (2) du porte-lame (4), et
- une unité de transport (60) destinée à introduire la lame neuve (6) dans le porte-lame (4).

18. Dispositif selon la revendication 17,
dans lequel l'unité de déverrouillage (38) présente un goujon (42) agissant sur une unité de retenue (16) associée, prévue dans le porte-lame (4) pour retenir la lame à remplacer (2), lequel goujon (42) est conçu déplaçable au moyen d'un actionneur de goujon (40), pour, au moins pendant l'enlèvement de la lame à remplacer (2), détacher de la lame à remplacer (2), un galet de pression (18) associé, bloquant la lame à remplacer (2) dans le porte-lame (4), de l'unité de retenue (16), ceci de telle manière que la lame à remplacer (2) puisse être déplacée hors du porte-lame (4) par l'unité d'enlèvement (50).

19. Dispositif selon l'une des revendications 17 ou 18,
dans lequel l'unité d'enlèvement (50) présente un mécanisme de préhension (51, 52) destiné à saisir la lame à remplacer (2).

20. Dispositif selon la revendication 19,
dans lequel le mécanisme de préhension (51, 52) présente un mécanisme de serrage (56) destiné à enserrer le tranchant (14) de la lame à remplacer (2).

21. Dispositif selon l'une des revendications 17 à 20,
ce dispositif étant déplaçable dans une direction sensiblement linéaire au moyen d'un actionneur, pour extraire du porte-lame (4), une lame à remplacer (2), saisie au moyen du mécanisme de serrage (56).

22. Dispositif selon l'une des revendications 17 à 21,
dans lequel une unité de déverrouillage (38) est prévue pour, lors de l'introduction de la lame neuve (6), desserrer un élément de retenue (16) retenant la lame neuve (6), après son introduction, dans le porte-lame (4).

23. Dispositif selon la revendication 22,
dans lequel l'unité de déverrouillage (38) présente un goujon (42) agissant sur une unité de retenue (16) associée, prévue dans le porte-lame (4) pour retenir la lame neuve (2),
lequel goujon (42) est conçu déplaçable au moyen d'un actionneur de goujon (40), pour, au moins lors de l'introduction de la lame neuve (6), desserrer un galet de pression (18), obturant le porte-lame (4), de l'unité de retenue (16), ceci de telle manière que la lame neuve (6) puisse être introduite dans le porte-lame (4) par l'unité de transport (60).

24. Dispositif selon l'une des revendications 22 ou 23,
dans lequel il est prévu un magasin à lames (8), duquel la lame neuve (6) peut être prélevée à l'unité de transport (60).

25. Dispositif selon la revendication 24,
dans lequel l'unité de transport (60) présente des rouleaux motorisés de transport de lame (68, 72), à l'aide desquels la lame neuve (6) peut être prélevée du magasin à lames (8), de préférence conçu sous forme d'un paquet de lames reposant sur un appui élastique, et peut être introduite dans le porte-lames (4) à garnir.

26. Dispositif selon la revendication 22 et l'une des revendications 17 à 25,
dans lequel il est prévu une seule unité de déverrouillage (38), qui produit le desserrage de l'élément de retenue (16) dans le porte-lame (4), de préférence par le même goujon (42), aussi bien pour l'enlèvement de la lame à remplacer (2) du porte-lame (4) que pour l'introduction de la lame neuve (6) dans le porte-lame (4).
